# FASCICULE DE BREVET EUROPEEN

(11) **EP 3 528 677 B1**
(45) Date de publication et mention de la délivrance du brevet: **08.09.2021**
(21) Numéro de dépôt: 17797693.3
(22) Date de dépôt: 23.10.2017
(51) Int. Cl.: A47J 43/07, A47J 43/08, A47J 43/044

(54) **APPAREIL ELECTROMENAGER DE PREPARATION CULINAIRE COMPORTANT UNE BASE D'ALIMENTATION ELECTRIQUE**
ELEKTRISCHES HAUSHALTSGERÄT ZUR ZUBEREITUNG VON SPEISEN MIT EINEM ENERGIEVERSORGUNGSSOCKEL
ELECTRICAL HOUSEHOLD FOOD-PREPARATION APPLIANCE COMPRISING A POWER SUPPLY BASE

(30) Priorité: 24.10.2016 FR 1660296
(43) Date de publication de la demande: 28.08.2019
(73) Titulaire: SEB S.A., 69130 Ecully (FR)
(72) Inventeur: CHARLES, Patrick, 65290 Louey (FR); BESSONNET, Dominique, 64420 Artigueloutan (FR); GIRAUD, Jean-Baptiste, 53810 Change (FR)
(74) Mandataire: SEB Développement
(86) Numéro de dépôt international: PCT/FR2017/052911
(87) Numéro de publication internationale: WO 2018/078264

(56) Documents cités:
- WO-A1-2014/075923
- WO-A1-2015/002416
- WO-A1-2015/012547
- CN-U- 201 602 662
- US-A1- 2013 074 700

## Description

La présente invention concerne le domaine technique des appareils électroménagers de préparation culinaire comportant un récipient de travail, un accessoire de travail rotatif agencé dans le récipient de travail, et un boîtier motorisé supérieur disposé au dessus du récipient de travail pour entraîner en rotation l'accessoire de travail rotatif selon un axe de rotation.

La présente invention concerne notamment, mais non exclusivement, les appareils du type précité comportant un couvercle intermédiaire agencé entre le récipient de travail et le boîtier motorisé supérieur.

Il est connu du document CN201602662U un appareil du type précité comportant une base recevant le récipient de travail, ladite base comportant un montant présentant un connecteur électrique de motorisation pour alimenter électriquement le boîtier motorisé supérieur. Toutefois dans ce document le boîtier motorisé supérieur est simplement posé sur le récipient de travail.

Un objet de la présente invention est de proposer un appareil du type précité dans lequel la sécurité de fonctionnement est améliorée.

Un autre objet de la présente invention est de proposer un appareil du type précité dont l'utilisation reste simple.

Un autre objet de la présente invention est de proposer un appareil du type précité dont la construction reste simple.

Ces objets sont atteints avec un appareil électroménager de préparation culinaire comportant un récipient de travail, un accessoire de travail rotatif disposé dans le récipient de travail, un boîtier motorisé supérieur disposé sur le récipient de travail pour entraîner en rotation l'accessoire de travail rotatif selon un axe de rotation, une base recevant le récipient de travail et comportant un montant présentant un connecteur électrique de motorisation pour alimenter électriquement le boîtier motorisé supérieur, du fait que le connecteur électrique de motorisation est agencé latéralement dans le montant, que le boîtier motorisé supérieur comporte au moins deux broches latérales, de préférence trois broches latérales, que les broches latérales s'étendent transversalement par rapport à l'axe de rotation, et que le boîtier motorisé supérieur disposé sur le récipient de travail peut être tourné sur le récipient de travail pour amener le connecteur électrique de motorisation en prise avec les broches latérales et alimenter électriquement le boîtier motorisé supérieur.

Ces dispositions permettent de réaliser un appareil électroménager de préparation culinaire du type précité, qui présente une utilisation à la fois simple et sûre.

Avantageusement alors, le boîtier motorisé supérieur disposé sur le récipient de travail peut occuper successivement par rotation par rapport au récipient de travail une position déverrouillée dans laquelle le boîtier motorisé supérieur peut être retiré du récipient de travail, une position verrouillée dans laquelle le boîtier motorisé supérieur est retenu sur le récipient de travail, dans laquelle le connecteur électrique de motorisation n'alimente pas électriquement le boîtier motorisé supérieur, et une position de travail dans laquelle le boîtier motorisé supérieur est retenu sur le récipient de travail et dans laquelle le connecteur électrique de motorisation alimente électriquement le boîtier motorisé supérieur.

Ces dispositions permettent d'améliorer encore la sécurité de l'appareil, sans compliquer son utilisation.

Selon une forme de réalisation avantageuse, le boîtier motorisé supérieur est verrouillé avec le montant par rotation autour de l'axe de rotation.

Cette disposition permet d'obtenir un premier point de verrouillage du boîtier motorisé supérieur, qui empêche le retrait du boîtier motorisé supérieur du récipient de travail par un simple soulèvement.

Selon une forme de réalisation avantageuse, le boîtier motorisé supérieur est verrouillé avec le récipient de travail par rotation autour de l'axe de rotation. Cette disposition permet d'obtenir un deuxième point de verrouillage du boîtier motorisé supérieur, qui empêche le retrait du boîtier motorisé supérieur du récipient de travail par un simple soulèvement.

Avantageusement alors, le boîtier motorisé supérieur est verrouillé avec une poignée du récipient de travail par rotation autour de l'axe de rotation.

Cette disposition facilite la réalisation du verrouillage avec le récipient de travail.

Avantageusement encore, le boîtier motorisé supérieur est verrouillé par rotation autour de l'axe de rotation, et le boîtier motorisé supérieur est verrouillé de manière opposée par rapport à l'axe de rotation d'une part avec le montant et d'autre part avec le récipient de travail.

Cette disposition permet d'obtenir un verrouillage efficace avec une réalisation simple.

Avantageusement encore, le récipient de travail porte un couvercle intermédiaire, le boîtier motorisé supérieur est disposé sur le couvercle intermédiaire, et le boîtier motorisé supérieur comporte un organe de détection repoussé par le couvercle intermédiaire pour autoriser le fonctionnement de l'appareil lorsque le connecteur électrique de motorisation alimente électriquement le boîtier motorisé supérieur.

Ainsi l'appareil ne peut fonctionner qu'en présence du couvercle intermédiaire.

Avantageusement alors, l'organe de détection est monté mobile contre un élément de rappel élastique.

Cette disposition permet d'obtenir un dispositif de sécurité électrique présentant une construction simple et fiable.

Avantageusement alors, le couvercle intermédiaire comporte un chanfrein latéral repoussant l'organe de détection contre l'élément de rappel élastique vers une position repoussée lorsque le boîtier motorisé supérieur est tourné sur le couvercle intermédiaire pour alimenter électriquement le boîtier motorisé supérieur, et ledit organe de détection en position repoussée actionne un interrupteur électrique autorisant le fonctionnement de l'appareil.

Cette disposition permet d'alimenter électriquement le boîtier motorisé supérieur après que le boîtier motorisé supérieur a été tourné par rapport au récipient de travail, pour être verrouillé.

Avantageusement encore, le boîtier motorisé supérieur est verrouillé par baïonnette avec le couvercle intermédiaire.

Cette disposition permet une meilleure solidarisation du boîtier motorisé supérieur, du couvercle intermédiaire et du récipient de travail.

Selon un mode de réalisation avantageux, l'appareil électroménager de préparation culinaire comporte un dispositif de chauffe électrique pour chauffer les aliments contenus dans le récipient de travail.

Avantageusement alors, le dispositif de chauffe électrique est porté par le récipient de travail et la base comporte un connecteur électrique de chauffe pour alimenter électriquement le dispositif de chauffe électrique lorsque le récipient de travail est disposé sur la base. En alternative, le dispositif de chauffe électrique pourrait notamment être porté par la base.

Avantageusement alors, le récipient de travail comporte un réceptacle réalisé en acier inoxydable, et le dispositif de chauffe électrique est fixé sous une plaque de diffusion thermique agencée sous le réceptacle.

Avantageusement alors, le dispositif de chauffe électrique est formé par un élément chauffant blindé.

Avantageusement encore, le récipient de travail présente un fond et comporte un organe de centrage s'élevant à partir du fond, et l'accessoire de travail rotatif est monté sur l'organe de centrage.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil électroménager de préparation culinaire selon l'invention,
- la figure 2 est une vue en coupe verticale de l'appareil électroménager de préparation culinaire illustré sur la figure 1, dans une configuration de rangement,
- la figure 3 est une vue en coupe verticale de l'appareil électroménager de préparation culinaire illustré sur la figure 1, dans une configuration d'utilisation, la base n'étant pas représentée,
- la figure 4 est une vue en élévation de l'appareil électroménager de préparation culinaire illustré sur la figure 1, dans une configuration assemblée,
- les figures 5 et 6 sont deux vues en perspective de côté et de dessus de la base de l'appareil électroménager de préparation culinaire illustré sur la figure 1,
- les figures 7 et 8 sont deux vues en perspective de côté et de dessous du récipient de travail de l'appareil électroménager de préparation culinaire illustré sur la figure 1,
- les figures 9 et 10 sont des vues en perspective de dessus du couvercle intermédiaire de l'appareil électroménager de préparation culinaire illustré sur la figure 1,
- les figures 11 et 12 sont des vues en perspective de dessous et de dessus du boîtier motorisé supérieur de l'appareil électroménager de préparation culinaire illustré sur la figure 1,

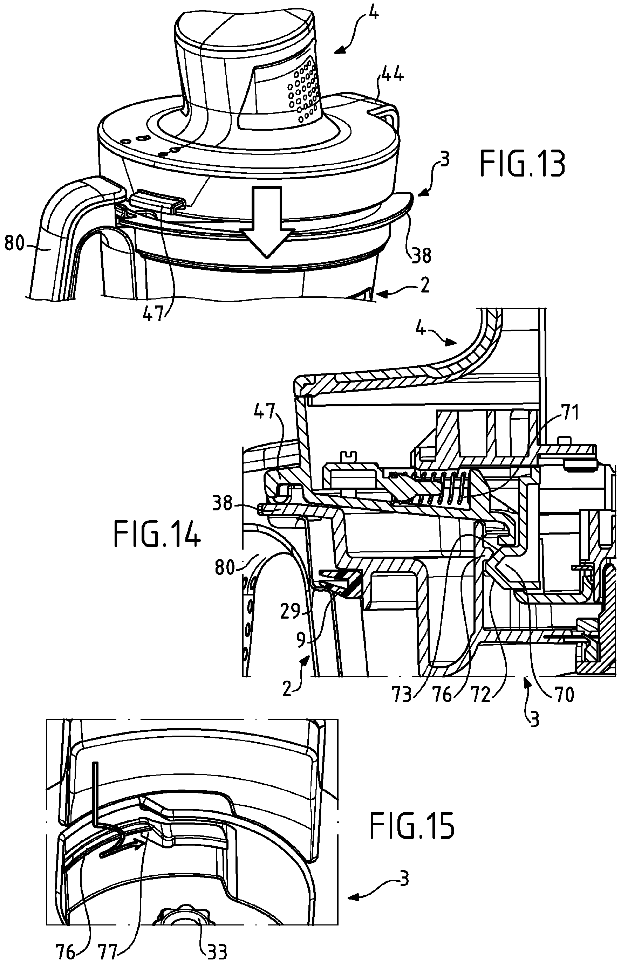

- la figure 13 est une vue partielle en perspective illustrant la mise en place par un mouvement axial du boîtier motorisé supérieur de l'appareil électroménager de préparation culinaire illustré sur la figure 1 sur le récipient de travail portant le couvercle intermédiaire,
- la figure 14 est une vue partielle en élévation et en coupe du boîtier motorisé supérieur, du couvercle intermédiaire et du récipient de travail dans la position de la figure 13,
- la figure 15 est une vue partielle en perspective du couvercle intermédiaire illustrant le déplacement d'un organe de retenue du boîtier motorisé supérieur de l'appareil électroménager de préparation culinaire illustré sur la figure 1, pour l'accrochage du boîtier motorisé supérieur,

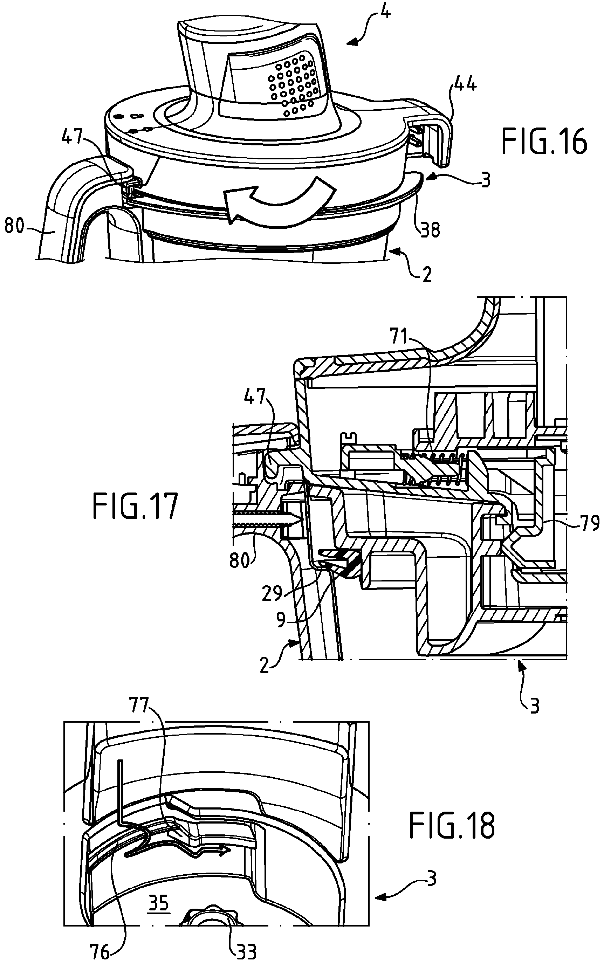

- la figure 16 est une vue partielle en perspective illustrant le verrouillage du boîtier motorisé supérieur de l'appareil électroménager de préparation culinaire illustré sur la figure 1 sur le récipient de travail portant le couvercle intermédiaire, par un mouvement de rotation dans un plan perpendiculaire à l'axe de rotation,
- la figure 17 est une vue partielle en élévation et en coupe du boîtier motorisé supérieur, du couvercle intermédiaire et du récipient de travail dans la position de la figure 16,
- la figure 18 est une vue partielle en perspective du couvercle intermédiaire illustrant le déplacement d'un organe de retenue du boîtier motorisé supérieur de l'appareil électroménager de préparation culinaire illustré sur la figure 1, pour l'accrochage et le verrouillage du boîtier motorisé supérieur.

L'appareil électroménager de préparation culinaire illustré sur les figures comporte une base 1, un récipient de travail 2, un couvercle intermédiaire 3, un boîtier motorisé supérieur 4, ainsi que des accessoires de préparation 5.

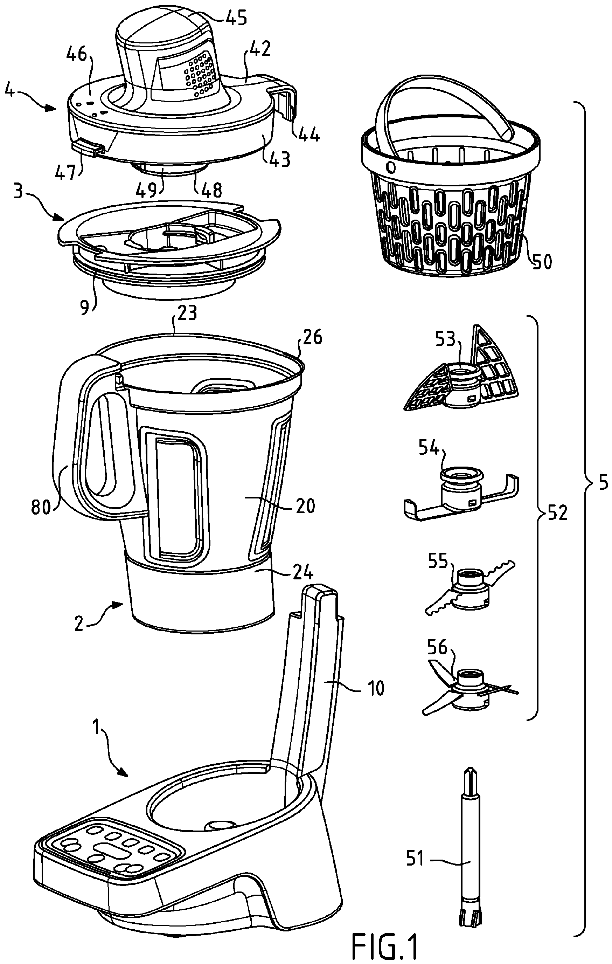

Tel que représenté sur la figure 1, les accessoires de préparation 5 comprennent un panier vapeur 50, un moyeu 51, et des outils de travail rotatifs 52 interchangeables. Les outils de travail rotatifs 52 comprennent un outil émulsionneur 53, un outil de mélange 54, un outil couteau denté 55 et un outil couteau coupant 56.

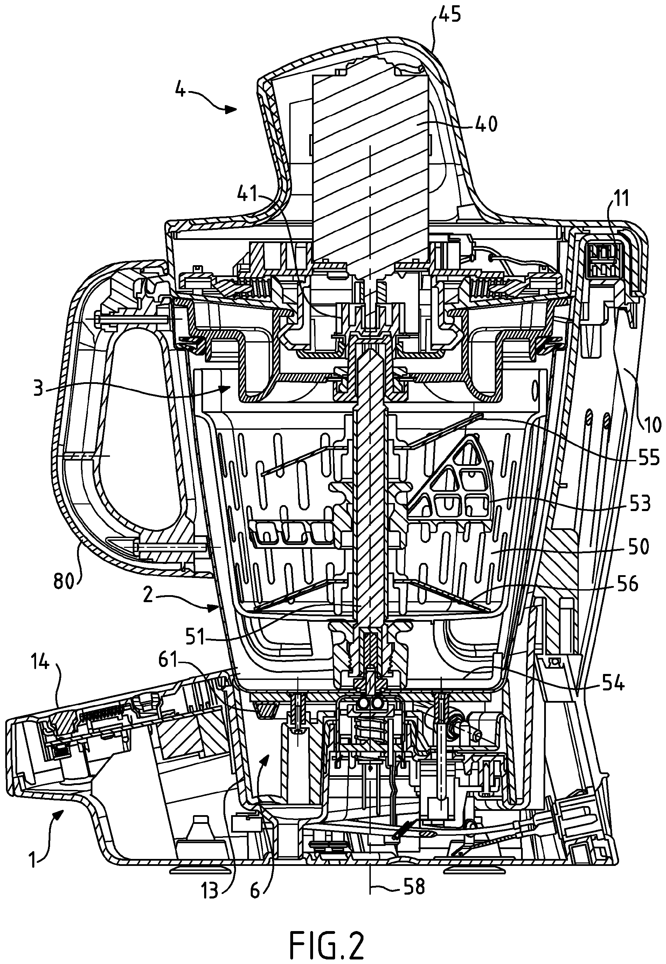

Les accessoires de préparation 5 peuvent être rangés dans le récipient de travail 2, tel que montré sur la figure 2.

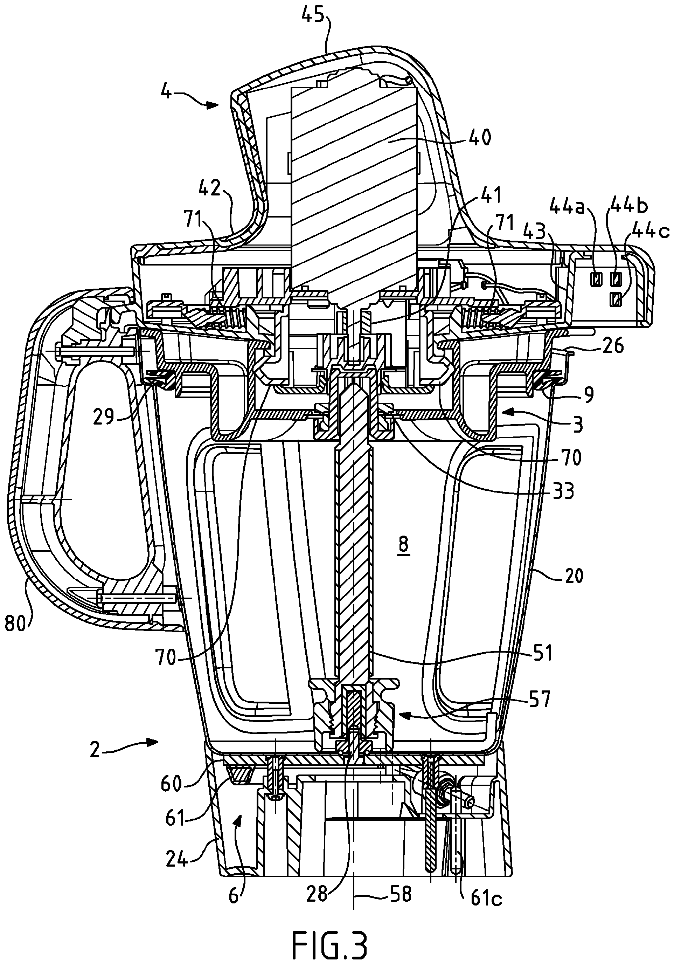

En configuration d'utilisation, l'appareil électroménager de préparation culinaire comporte un accessoire de travail rotatif 57 disposé dans le récipient de travail 2, tel que montré sur la figure 3. Le boîtier motorisé supérieur 4 est disposé sur le récipient de travail 2 pour entraîner en rotation l'accessoire de travail rotatif 57 selon un axe de rotation 58.

Dans l'exemple de réalisation illustré sur les figures, chacun des outils de travail rotatifs 52 peut être monté sur le moyeu 51 pour former l'accessoire de travail rotatif 57.

Le récipient de travail 2 présente un fond 25. Le récipient de travail 2 comporte un organe de centrage 28 s'élevant à partir du fond 25. Tel que visible sur la figure 3, l'accessoire de travail rotatif 57 est monté sur l'organe de centrage 28.

Le récipient de travail 2 porte le couvercle intermédiaire 3. Selon une forme de réalisation avantageuse, le couvercle intermédiaire 3 comprend un joint annulaire 9, mieux visible sur la figure 3. Le joint annulaire 9 vient en appui périphérique à l'intérieur du récipient de travail 2.

L'appareil électroménager de préparation culinaire illustré sur les figures comprend une enceinte de travail 8 définie par le récipient de travail 2 et le couvercle intermédiaire 3.

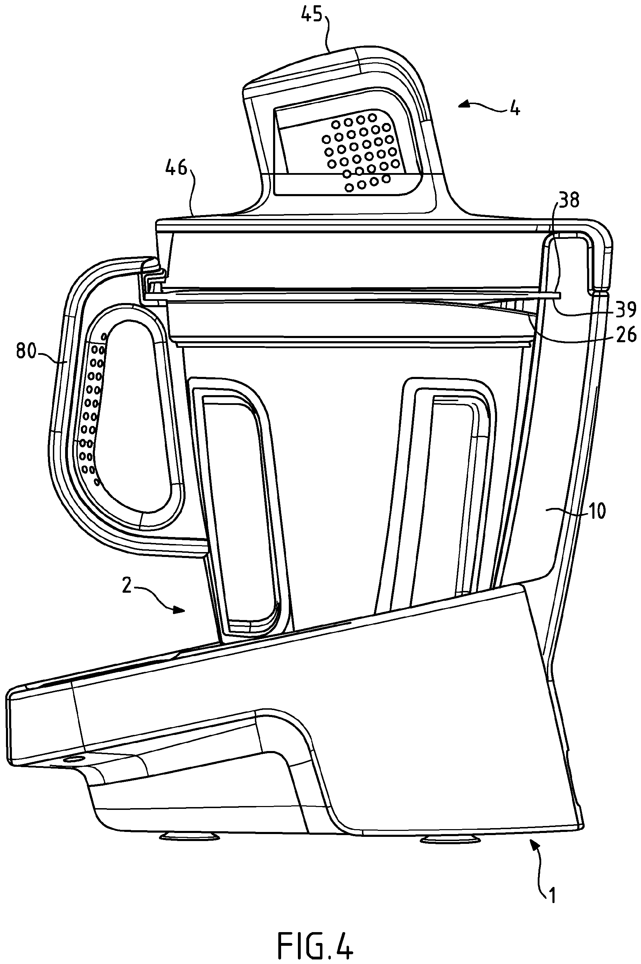

Le boîtier motorisé supérieur 4 est disposé sur le couvercle intermédiaire 3. La base 1 reçoit le récipient de travail 2, tel que montré sur la figure 4.

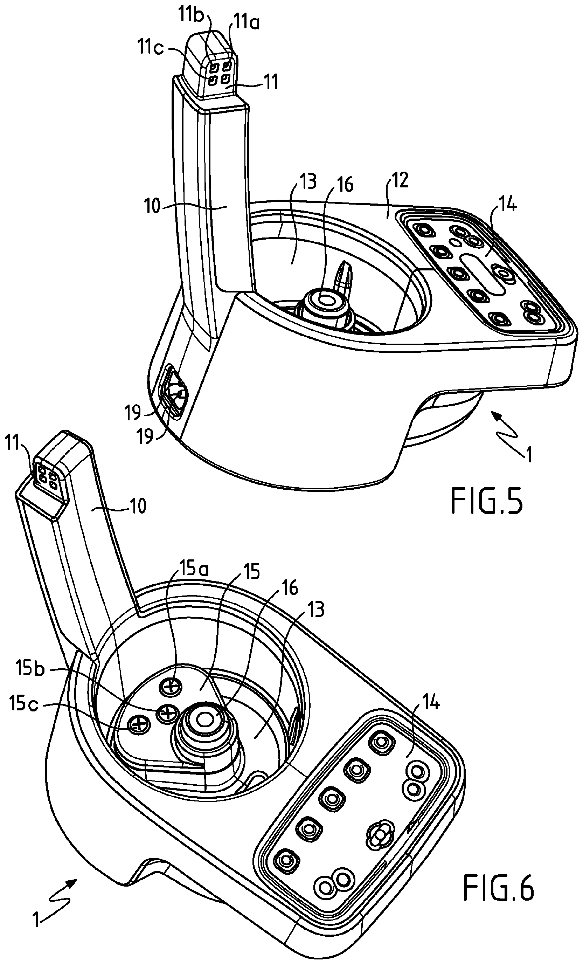

La base 1 comporte un montant 10, mieux visible sur les figures 5 et 6. Le montant 10 présente un connecteur électrique de motorisation 11 pour alimenter le boîtier motorisé supérieur 4. Le connecteur électrique de motorisation 11 est agencé latéralement dans le montant 10. Le connecteur électrique de motorisation 11 comporte trois douilles latérales 11a, 11b, 11c disposées dans une paroi latérale de la partie supérieure du montant 10. Les douilles latérales 11a, 11b, 11c présentent une entrée latérale agencée tangentiellement par rapport à l'axe de rotation 58.

La base 1 forme un socle 12 recevant le récipient de travail 2. A cet effet la base 1 présente une empreinte 13 ménagée dans le socle 12 pour recevoir la partie inférieure du récipient de travail 2. La base 1 présente un tableau de commande 14 disposé sur le socle 12. La partie supérieure du socle 12 est relevée en direction du montant 10. La partie supérieure du socle 12 est plane et entoure l'empreinte 13. Le montant 10 est agencé à l'opposé du tableau de commande 14 par rapport à l'empreinte 13.

L'appareil électroménager de préparation culinaire illustré sur les figures comporte un dispositif de chauffe électrique 6 pour chauffer les aliments contenus dans le récipient de travail 2.

Dans l'exemple de réalisation illustré sur les figures, le dispositif de chauffe électrique 6 est porté par le récipient de travail 2. Le récipient de travail 2 est monté amovible sur la base 1. A cet effet, la base 1 comporte un connecteur électrique de chauffe 15, mieux visible sur la figure 6, pour alimenter le dispositif de chauffe électrique 6 lorsque le récipient de travail 2 est disposé sur la base 1. Le connecteur électrique de chauffe 15 comporte trois douilles supérieures 15a, 15b, 15c disposées dans l'empreinte 13. Les douilles supérieures 15a, 15b, 15c présentent une entrée supérieure agencée parallèlement à l'axe de rotation 58.

La base 1 comporte également un dispositif de contrôle de température comportant un capteur 16 prévu pour venir en contact avec le récipient de travail 2 disposé sur la base 1. Plus particulièrement dans l'exemple de réalisation illustré sur les figures, le capteur 16 est agencé dans l'empreinte 13. La base 1 présente des broches d'alimentation 19, visibles sur la figure 5, prévues pour recevoir un cordon d'alimentation électrique, non représenté.

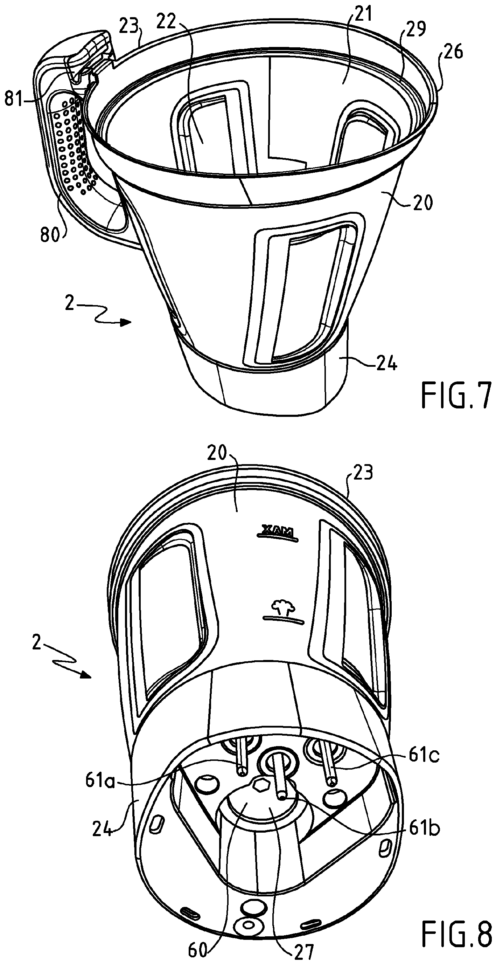

Le récipient de travail 2 illustré sur les figures 7 et 8 comporte un réceptacle 20 présentant une paroi latérale intérieure 21. Le réceptacle 20 est avantageusement réalisé en métal, de préférence en acier inoxydable. La paroi latérale intérieure 21 comporte des nervures internes 22. Le récipient de travail 2 présente un bord supérieur 23. Le bord supérieur 23 du récipient de travail 2 présente un décrochement supérieur 26, mieux visible sur la figure 3. Le récipient de travail 2 comporte une poignée 80. La poignée 80 est montée sur le réceptacle 20. Le décrochement supérieur 26 est agencé à l'opposé de la poignée 80.

Le récipient de travail 2 comporte une plaque de diffusion thermique 60 agencée sous le réceptacle 20. La plaque de diffusion thermique 60 est avantageusement réalisée en aluminium. Le récipient de travail 2 comporte une embase 24 prévue pour reposer sur la base 1. L'embase 24 est montée sous le réceptacle 20. Tel que représenté sur la figure 2, l'embase 24 est engagée dans l'empreinte 13 lorsque le récipient de travail 2 est en place sur la base 1. La paroi latérale intérieure 21 présente un décrochement annulaire 29.

Dans l'exemple de réalisation illustré sur les figures, le dispositif de chauffe électrique 6 est formé par un élément chauffant blindé 61 fixé sous la plaque de diffusion thermique 60. La plaque de diffusion thermique 60 est agencée sous le réceptacle 20. Tel que visible sur la figure 8, trois broches inférieures 61a, 61b, 61c sont issues de l'embase 24. Deux des broches inférieures 61a, 61b, 61c sont reliées aux bornes de l'élément chauffant blindé 61 et la troisième formant la terre est reliée au réceptacle 20 et/ou à la plaque de diffusion thermique 60.

Tel que visible sur les figures 3 et 8, l'embase 24 présente une ouverture 27 laissant apparaître le fond 25. L'ouverture 27 est prévue pour le passage du capteur 16. Tel que visible sur la figure 2, le capteur 16 vient en contact avec le fond 25 du récipient de travail 2. Le capteur 16 est agencé en position centrale par rapport au fond 25 du récipient de travail 2. L'axe de rotation 58 passe par le capteur 16.

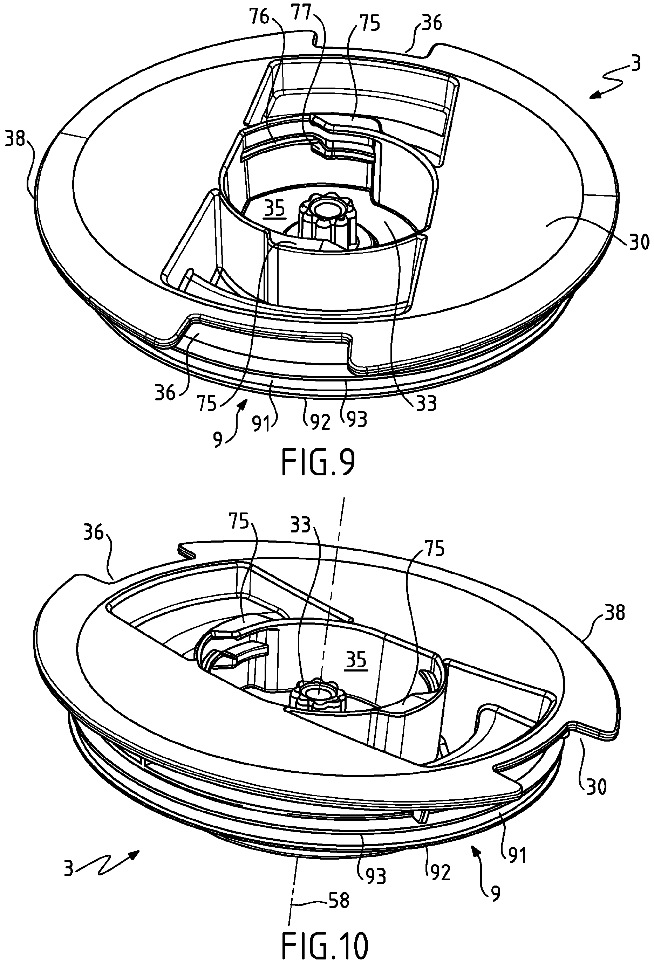

Le couvercle intermédiaire 3 comporte un corps 30 s'étendant autour de l'axe de rotation 58, tel que représenté sur les figures 9 et 10. Le corps 30 présente un logement central 35 s'étendant autour de l'axe de rotation 58. Le logement central 35 présente deux collerettes internes 75 prévues pour un verrouillage par baïonnette avec le boîtier motorisé supérieur 4. Le couvercle intermédiaire 3 présente deux organes d'accrochage 76 agencés dans le logement central 35. Les organes d'accrochage 76 et les collerettes internes 75 sont agencés de manière opposée. Les organes d'accrochage 76 sont décalés axialement et latéralement par rapport aux collerettes internes 75. Le couvercle intermédiaire 3 comporte un chanfrein latéral 77 agencé dans le logement central 35. Le chanfrein latéral 77 prolonge l'un des organes d'accrochage 76. Le chanfrein latéral 77 est agencé sous l'une des collerettes internes 75.

Le couvercle intermédiaire 3 est bloqué en rotation par rapport au récipient de travail 2. A cet effet le corps 30 présente deux échancrures périphériques 36. L'une des échancrures périphériques 36 reçoit la poignée 80, et l'autre reçoit le montant 10. De préférence chacune des échancrures périphériques 36 est prévue pour recevoir indifféremment la poignée 80 ou le montant 10.

Le couvercle intermédiaire 3 comporte une bordure extérieure 38 présentant une partie inférieure 39 apparente lorsque le boîtier motorisé supérieur 4 est disposé sur le couvercle intermédiaire 3, tel que visible notamment sur la figure 4.

Selon une forme de réalisation préférée, le couvercle intermédiaire 3 porte un organe de transmission rotatif 33. Tel que montré sur la figure 3, l'organe de transmission rotatif 33 est entrainé en rotation par le boîtier motorisé supérieur 4 et entraîne en rotation l'accessoire de travail rotatif 57 disposé dans le récipient de travail 2. Le logement central 35 entoure l'organe de transmission rotatif 33. A titre de variante, le boîtier motorisé supérieur 4 pourrait directement entraîner en rotation l'accessoire de travail rotatif 57, le couvercle intermédiaire 3 présentant alors un passage axial libre.

Le boîtier motorisé supérieur 4 loge un moteur électrique 40 entraînant un réducteur 41 prévu pour entraîner l'accessoire de travail rotatif 57 par l'intermédiaire de l'organe de transmission rotatif 33 du couvercle intermédiaire 3, tel que visible sur la figure 3. Le boîtier motorisé supérieur 4 comporte un capot supérieur 42 assemblé avec un capot inférieur 43. Le capot supérieur 42 forme un pommeau 45 prévu pour la préhension du boîtier motorisé supérieur 4. Tel que visible sur les figures 2 et 3, le moteur électrique 40 s'étend partiellement à l'intérieur du pommeau 45. Le pommeau 45 s'élève au dessus d'une partie circonférentielle 46 du boîtier motorisé supérieur 4, tel que visible sur les figures 1 à 4. Le capot inférieur 43 présente une partie centrale inférieure 48 proéminente.

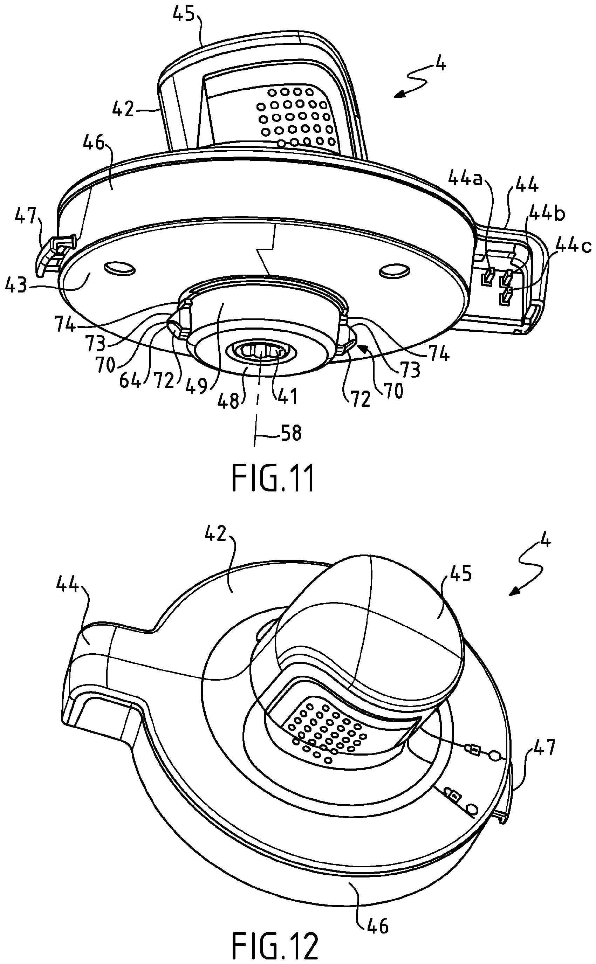

Tel que visible sur la figure 11, le boîtier motorisé supérieur 4 comporte trois broches latérales 44a, 44b, 44c logées en périphérie de la partie circonférentielle 46 du boîtier motorisé supérieur 4. Deux des broches latérales 44a, 44b, 44c sont prévues pour alimenter électriquement le moteur électrique 40, la troisième étant prévue pour mettre à la terre le moteur électrique 40. Les broches latérales 44a, 44b, 44c s'étendent transversalement sous un prolongement 44 du capot supérieur 42. Ainsi les broches latérales 44a, 44b, 44c sont agencées tangentiellement par rapport à l'ouverture supérieure du récipient de travail 2. Les broches latérales 44a, 44b, 44c s'étendent transversalement par rapport à l'axe de rotation 58. Deux des broches latérales 44a, 44b, 44c sont agencées à une distance identique de l'axe de rotation 58 mais à des niveaux différents, la troisième étant agencée au même niveau que la broche latérale la plus élevée, mais en étant plus proche de l'axe de rotation 58. Le prolongement 44 forme une corne et ménage une ouverture latérale et inférieure prévue pour le passage du connecteur électrique de motorisation 11 du montant 10.

Le boîtier motorisé supérieur 4 disposé sur le récipient de travail 2 peut être tourné sur le récipient de travail 2 pour amener le connecteur électrique de motorisation 11 en prise avec les broches latérales 44a, 44b, 44c du boîtier motorisé supérieur 4 et alimenter électriquement le boîtier motorisé supérieur 4.

Le boîtier motorisé supérieur 4 comporte deux organes d'accrochage 70 opposés, visibles sur les figures 3 et 11. Les organes d'accrochages 70 sont agencées dans une paroi latérale 49 de la partie centrale inférieure 48 du boîtier motorisé supérieur 4. Chaque organe d'accrochage 70 est monté mobile dans un plan perpendiculaire à l'axe de rotation 58, contre un élément de rappel élastique 71. Chaque organe d'accrochage 70 présente un chanfrein inférieur 72. Chaque organe d'accrochage 70 présente un chanfrein supérieur 73.

Le boîtier motorisé supérieur 4 comporte un organe de détection 64 repoussé par le couvercle intermédiaire 3 pour autoriser le fonctionnement de l'appareil lorsque le connecteur électrique de motorisation 11 alimente électriquement le boîtier motorisé supérieur 4. Plus particulièrement dans l'exemple de réalisation illustré sur les figures, l'organe de détection 64 et l'un des organes d'accrochage 70 appartiennent à une pièce 79 montée mobile contre l'élément de rappel élastique 71. Ainsi l'organe de détection 64 est monté mobile contre l'élément de rappel élastique 71, selon une direction principalement radiale par rapport à l'axe de rotation 58. Dans l'exemple de réalisation illustré sur les figures, l'organe de détection 64 est agencé entre le chanfrein inférieur 72 et le chanfrein supérieur 73.

Le boîtier motorisé supérieur 4 comporte une patte de verrouillage 47 agencée en périphérie de la partie circonférentielle 46. Plus particulièrement, la patte de verrouillage 47 est agencée à l'opposé du prolongement 44, tel que bien visible sur la figure 12.

Le boîtier motorisé supérieur 4 est verrouillé par baïonnette avec le couvercle intermédiaire 3 et peut occuper par rotation sur le couvercle intermédiaire 3 successivement une position déverrouillée et une position verrouillée. A cet effet le boîtier motorisé supérieur 4 présente des ergots extérieurs 74 prévus pour être engagés sous les collerettes internes 75 du couvercle intermédiaire 3. Les ergots extérieurs 74 sont agencées sur la paroi latérale 49 de la partie centrale inférieure 48 du boîtier motorisé supérieur 4. Les ergots extérieurs 74 sont agencés au dessus des organes d'accrochage 70.

L'appareil électroménager de préparation culinaire illustré sur les figures s'utilise et fonctionne de la manière suivante.

L'utilisateur dispose le récipient de travail 2 sur la base 1, puis met en place l'accessoire de travail rotatif 57 dans le récipient de travail 2. L'utilisateur dispose ensuite le couvercle intermédiaire 3 dans le récipient de travail 2. La bordure extérieure 38 du couvercle intermédiaire 3 s'étend au dessus du bord supérieur 23 du récipient de travail 2, tel que visible sur la figure 4. L'utilisateur dispose ensuite le boîtier motorisé supérieur 4 sur le couvercle intermédiaire 3, puis tourne le boîtier motorisé supérieur 4 par rapport au récipient de travail 2, si nécessaire en tenant la poignée 80.

Le boîtier motorisé supérieur 4 est verrouillé avec le montant 10 par rotation autour de l'axe de rotation 58. Les broches latérales 44a, 44b, 44c du boîtier motorisé supérieur 4 sont engagées dans les douilles latérales 11a, 11b, 11c du montant 10.

Le boîtier motorisé supérieur 4 est verrouillé avec le récipient de travail 2 par rotation autour de l'axe de rotation 58, plus particulièrement avec la poignée 80. La patte de verrouillage 47 du boîtier motorisé supérieur 4 est engagée dans un logement de verrouillage 81 de la poignée 80.

Ainsi par rotation autour de l'axe de rotation 58, le boîtier motorisé supérieur 4 est verrouillé de manière opposée d'une part avec le montant 10 et d'autre part avec le récipient de travail 2.

Le boîtier motorisé supérieur 4 disposé sur le récipient de travail 2 peut occuper successivement par rotation par rapport au récipient de travail 2 une position déverrouillée, dans laquelle le boîtier motorisé supérieur 4 peut être retiré du récipient de travail 2, une position verrouillée dans laquelle le boîtier motorisé supérieur 4 est retenu sur le récipient de travail 2, dans laquelle le connecteur électrique de motorisation 11 n'alimente pas électriquement le boîtier motorisé supérieur 4 et une position de travail dans laquelle le boîtier motorisé supérieur 4 est retenu sur le récipient de travail 2 et dans laquelle le connecteur électrique de motorisation 11 alimente électriquement le boîtier motorisé supérieur 4.

Le boîtier motorisé supérieur 4 peut occuper par rotation sur le couvercle intermédiaire 3 successivement la position déverrouillée, dans laquelle le boîtier motorisé supérieur 4 peut être retiré du récipient de travail 2, puis la position verrouillée, dans laquelle le boîtier motorisé supérieur 4 est verrouillé sur le récipient de travail 2, puis la position de travail.

Lorsque le boîtier motorisé supérieur 4 est tourné sur le couvercle intermédiaire 3 pour alimenter électriquement le boîtier motorisé supérieur 4, le chanfrein latéral 77 du couvercle intermédiaire 3 repousse l'organe de détection 64 contre l'élément de rappel élastique 71 vers la position repoussée. L'organe de détection 64 en position repoussée actionne un interrupteur électrique (non représenté sur les figures) autorisant le fonctionnement de l'appareil.

A titre de variante, les broches latérales 44a, 44b, 44c ne sont pas nécessairement formées par des tiges adjacentes, mais pourraient notamment être formées par des éléments concentriques, les douilles latérales 11a, 11b, 11c étant adaptées en conséquence.

A titre de variante, le boîtier motorisé supérieur 4 peut comporter au moins deux broches latérales engagées chacune dans une douille latérale du montant 10. Le récipient de travail 2 peut comporter au moins deux broches inférieures engagées chacune dans une douille supérieure de la base.

A titre de variante, La présente invention n'est nullement limitée à l'exemple de réalisation décrit et à ses variantes, mais englobe de nombreuses modifications dans le cadre des revendications.

## Revendications

1. Appareil électroménager de préparation culinaire comportant un récipient de travail (2), un accessoire de travail rotatif (57) disposé dans le récipient de travail (2), un boîtier motorisé supérieur (4) disposé sur le récipient de travail (2) pour entraîner en rotation l'accessoire de travail rotatif (57) selon un axe de rotation (58), une base (1) recevant le récipient de travail (2) et comportant un montant (10) présentant un connecteur électrique de motorisation (11) pour alimenter électriquement le boîtier motorisé supérieur (4), **caractérisé en ce que** le connecteur électrique de motorisation (11) est agencé latéralement dans le montant (10), **en ce que** le boîtier motorisé supérieur (4) comporte au moins deux broches latérales (44a, 44b, 44c), de préférence trois broches latérales (44a, 44b, 44c), **en ce que** les broches latérales (44a, 44b, 44c) s'étendent transversalement par rapport à l'axe de rotation (58), et **en ce que** le boîtier motorisé supérieur (4) disposé sur le récipient de travail (2) peut être tourné sur le récipient de travail (2) pour amener le connecteur électrique de motorisation (11) en prise avec les broches latérales (44a, 44b, 44c) et alimenter électriquement le boîtier motorisé supérieur (4).

2. Appareil électroménager de préparation culinaire selon la revendication 1, **caractérisé en ce que** le boîtier motorisé supérieur (4) disposé sur le récipient de travail (2) peut occuper successivement par rotation par rapport au récipient de travail (2) une position déverrouillée dans laquelle le boîtier motorisé supérieur (4) peut être retiré du récipient de travail (2), une position verrouillée dans laquelle le boîtier motorisé supérieur (4) est retenu sur le récipient de travail (2), dans laquelle le connecteur électrique de motorisation (11) n'alimente pas électriquement le boîtier motorisé supérieur (4), et une position de travail dans laquelle le boîtier motorisé supérieur (4) est retenu sur le récipient de travail (2) et dans laquelle le connecteur électrique de motorisation (11) alimente électriquement le boîtier motorisé supérieur (4).

3. Appareil électroménager de préparation culinaire selon l'une des revendications 1 ou 2, **caractérisé en ce que** le boîtier motorisé supérieur (4) est verrouillé avec le montant (10) par rotation autour de l'axe de rotation (58).

4. Appareil électroménager de préparation culinaire selon l'une des revendications 1 à 3, **caractérisé en ce que** le boîtier motorisé supérieur (4) est verrouillé avec le récipient de travail (2) par rotation autour de l'axe de rotation (58).

5. Appareil électroménager de préparation culinaire selon l'une des revendications 1 à 4, **caractérisé en ce que** le boîtier motorisé supérieur (4) est verrouillé avec une poignée (80) du récipient de travail (2) par rotation autour de l'axe de rotation (58).

6. Appareil électroménager de préparation culinaire selon l'une des revendications 1 à 5, **caractérisé en ce que** le boîtier motorisé supérieur (4) est verrouillé par rotation autour de l'axe de rotation (58), et **en ce que** le boîtier motorisé supérieur (4) est verrouillé de manière opposée par rapport à l'axe de rotation (58) d'une part avec le montant (10) et d'autre part avec le récipient de travail (2).

7. Appareil électroménager de préparation culinaire selon l'une des revendications 1 à 6, **caractérisé en ce que** le récipient de travail (2) porte un couvercle intermédiaire (3), **en ce que** le boîtier motorisé supérieur (4) est disposé sur le couvercle intermédiaire (3), et **en ce que** le boîtier motorisé supérieur (4) comporte un organe de détection (64) repoussé par le couvercle intermédiaire (3) pour autoriser le fonctionnement de l'appareil lorsque le connecteur électrique de motorisation (11) alimente électriquement le boîtier motorisé supérieur (4).

8. Appareil électroménager de préparation culinaire selon la revendication 7, **caractérisé en ce que** l'organe de détection (64) est monté mobile contre un élément de rappel élastique (71).

9. Appareil électroménager de préparation culinaire selon la revendication 8, **caractérisé en ce que** le couvercle intermédiaire (3) comporte un chanfrein latéral (77) repoussant l'organe de détection (64) contre l'élément de rappel élastique (71) vers une position repoussée lorsque le boîtier motorisé supérieur (4) est tourné sur le couvercle intermédiaire (3) pour alimenter électriquement le boîtier motorisé supérieur (4), et **en ce que** ledit organe de détection (64) en position repoussée actionne un interrupteur électrique autorisant le fonctionnement de l'appareil.

10. Appareil électroménager de préparation culinaire selon l'une des revendications 7 à 9, **caractérisé en ce que** le boîtier motorisé supérieur (4) est verrouillé par baïonnette avec le couvercle intermédiaire (3).

11. Appareil électroménager de préparation culinaire selon l'une des revendications 1 à 10, **caractérisé en ce qu'**il comporte un dispositif de chauffe électrique (6) pour chauffer les aliments contenus dans le récipient de travail (2).

12. Appareil électroménager de préparation culinaire selon la revendication 11, **caractérisé en ce que** le dispositif de chauffe électrique (6) est porté par le récipient de travail (2) et **en ce que** la base (1) comporte un connecteur électrique de chauffe (15) pour alimenter électriquement le dispositif de chauffe électrique (6) lorsque le récipient de travail (2) est disposé sur la base (1).

13. Appareil électroménager de préparation culinaire selon la revendication 12, **caractérisé en ce que** le récipient de travail (2) comporte un réceptacle (20) réalisé en acier inoxydable, et **en ce que** le dispositif de chauffe électrique (6) est fixé sous une plaque de diffusion thermique (60) agencée sous le réceptacle (20).

14. Appareil électroménager de préparation culinaire selon la revendication 13, **caractérisé en ce que** le dispositif de chauffe électrique (6) est formé par un élément chauffant blindé (61).

15. Appareil électroménager de préparation culinaire selon l'une des revendications 1 à 14, **caractérisé en ce que** le récipient de travail (2) présente un fond (25) et comporte un organe de centrage (28) s'élevant à partir du fond (25), et **en ce que** l'accessoire de travail rotatif (57) est monté sur l'organe de centrage (28).

## Patentansprüche

1. Elektrohaushaltsgerät zur Nahrungsmittelzubereitung, das einen Arbeitsbehälter (2), ein drehendes Arbeitszubehör (57), das in dem Arbeitsbehälter (2) angeordnet ist, ein oberes motorisiertes Gehäuse (4), das auf dem Arbeitsbehälter (2) angeordnet ist, um das drehende Arbeitszubehör (57) gemäß einer Rotationsachse (58) anzutreiben, eine Basis (1), die den Arbeitsbehälter (2) aufnimmt und einen Ständer (10) umfasst, der einen Motorisierungssteckverbinder (11) zum elektrischen Versorgen des oberen motorisierten Gehäuses (4) aufweist, umfasst, **dadurch gekennzeichnet, dass** der elektrische Motorisierungssteckverbinder (11) seitlich in dem Ständer (10) eingerichtet ist, dass das obere motorisierte Gehäuse (4) mindestens zwei seitliche Spindeln (44a, 44b, 44c), vorzugsweise drei seitliche Spindeln (44a, 44b, 44c), umfasst, und dass sich die seitlichen Spindeln (44a, 44b, 44c) in Bezug auf die Rotationsachse (58) quer erstrecken, und dass das obere motorisierte Gehäuse (4), das auf dem Arbeitsbehälter (2) angeordnet ist, auf dem Arbeitsbehälter (2) gedreht werden kann, um den elektrischen Motorisierungssteckverbinder (11) mit den seitlichen Spindeln (44a, 44b, 44c) in Eingriff zu bringen und das obere motorisierte Gehäuse (4) elektrisch zu versorgen.

2. Elektrohaushaltsgerät zur Nahrungsmittelzubereitung nach Anspruch 1, **dadurch gekennzeichnet, dass** das obere motorisierte Gehäuse (4), das auf dem Arbeitsbehälter (2) angeordnet ist, nacheinander durch Drehung in Bezug auf den Arbeitsbehälter (2) eine entriegelter Position einnehmen kann, in der das obere motorisierte Gehäuse (4) von dem Arbeitsbehälter (2) abgenommen werden kann, eine verriegelte Position, in der das obere motorisierte Gehäuse (4) auf dem Arbeitsbehälter (2) gehalten wird, in der der elektrische Motorisierungssteckverbinder (11) das obere motorisierte Gehäuse (4) elektrisch nicht versorgt, und einer Arbeitsposition, in der das obere motorisierte Gehäuse (4) auf dem Arbeitsbehälter (2) gehalten wird, und in der der elektrische Motorisierungssteckverbinder (11) das obere motorisierte Gehäuse (4) elektrisch versorgt.

3. Elektrohaushaltsgerät zur Nahrungsmittelzubereitung nach einem der Ansprüche 1 oder 2, **dadurch gekennzeichnet, dass** das obere motorisierte Gehäuse (4) mit dem Ständer (10) durch Drehung um die Rotationsachse (58) verriegelt ist.

4. Elektrohaushaltsgerät zur Nahrungsmittelzubereitung nach einem der Ansprüche 1 bis 3, **dadurch gekennzeichnet, dass** das obere motorisierte Gehäuse (4) mit dem Arbeitsbehälter (2) durch Drehung um die Rotationsachse (58) verriegelt ist.

5. Elektrohaushaltsgerät zur Nahrungsmittelzubereitung nach einem der Ansprüche 1 bis 4, **dadurch gekennzeichnet, dass** das obere motorisierte Gehäuse (4) mit einem Griff (80) des Arbeitsbehälters (2) durch Drehung um die Rotationsachse (58) verriegelt ist.

6. Elektrohaushaltsgerät zur Nahrungsmittelzubereitung nach einem der Ansprüche 1 bis 5, **dadurch gekennzeichnet, dass** das obere motorisierte Gehäuse (4) durch Drehung um die Rotationsachse (58) verriegelt ist, und dass das obere motorisierte Gehäuse (4) auf entgegengesetzte Art in Bezug auf die Rotationsachse (58) einerseits mit dem Ständer (10) und andererseits mit dem Arbeitsbehälter (2) verriegelt ist.

7. Elektrohaushaltsgerät zur Nahrungsmittelzubereitung nach einem der Ansprüche 1 bis 6, **dadurch gekennzeichnet, dass** der Arbeitsbehälter (2) einen Zwischendeckel (3) trägt, dass das obere motorisierte Gehäuse (4) auf dem Zwischendeckel (3) angeordnet ist, und dass das obere motorisierte Gehäuse (4) ein Erfassungsorgan (64) umfasst, das von dem Zwischendeckel (3) zurückgeschoben wird, um den Betrieb des Geräts zu gestatten, wenn der Motorisierungssteckverbinder (11) das obere motorisierte Gehäuse (4) elektrisch versorgt.

8. Elektrohaushaltsgerät zur Nahrungsmittelzubereitung nach Anspruch 7, **dadurch gekennzeichnet, dass** das Erfassungsorgan (64) beweglich gegen ein elastisches Rückstellelement (71) montiert ist.

9. Elektrohaushaltsgerät zur Nahrungsmittelzubereitung nach Anspruch 8, **dadurch gekennzeichnet, dass** der Zwischendeckel (3) eine seitliche Abfasung (77) umfasst, die das Erfassungsorgan (64) gegen das elastische Rückstellelement (71) zu einer zurückgeschoben Position zurückschiebt, wenn das obere motorisierte Gehäuse (4) auf dem Zwischendeckel (3) gedreht wird, um das obere motorisierte Gehäuse (4) elektrisch zu versorgen, und dass das Erfassungsorgan (64) in zurückgeschobener Position einen elektrischen Schalter betätigt, der den Betrieb des Geräts gestattet.

10. Elektrohaushaltsgerät zur Nahrungsmittelzubereitung nach einem der Ansprüche 7 bis 9, **dadurch gekennzeichnet, dass** das obere motorisierte Gehäuse (4) per Bajonettverschluss mit dem Zwischendeckel (3) verriegelt ist.

11. Elektrohaushaltsgerät zur Nahrungsmittelzubereitung nach einem der Ansprüche 1 bis 10, **dadurch gekennzeichnet, dass** es eine elektrische Heizvorrichtung (6) zum Erhitzen der Nahrungsmittel, die in dem Arbeitsbehälter (2) enthalten sind, umfasst.

12. Elektrohaushaltsgerät zur Nahrungsmittelzubereitung nach Anspruch 11, **dadurch gekennzeichnet, dass** die elektrische Heizvorrichtung (6) von dem Arbeitsbehälter (2) getragen wird, und dass die Basis (1) einen elektrischen Heizsteckverbinder (15) umfasst, um die elektrische Heizvorrichtung (6) elektrisch zu versorgen, wenn der Arbeitsbehälter (2) auf der Basis (1) angeordnet ist.

13. Elektrohaushaltsgerät zur Nahrungsmittelzubereitung nach Anspruch 12, **dadurch gekennzeichnet, dass** der Arbeitsbehälter (2) eine Aufnahme (20) umfasst, die aus rostfreiem Stahl hergestellt ist, und dass die elektrische Heizvorrichtung (6) unter einer Wärmeverteilungsplatte (60), die unter der Aufnahme (20) eingerichtet ist, befestigt ist.

14. Elektrohaushaltsgerät zur Nahrungsmittelzubereitung nach Anspruch 13, **dadurch gekennzeichnet, dass** die elektrische Heizvorrichtung (6) von einem gekapselten Heizelement (61) gebildet ist.

15. Elektrohaushaltsgerät zur Nahrungsmittelzubereitung nach einem der Ansprüche 1 bis 14, **dadurch gekennzeichnet, dass** der Arbeitsbehälter (2) einen Boden (25) aufweist und ein Zentrierorgan (28) umfasst, das ausgehend von dem Boden (25) hochragt, und dass das drehende Arbeitszubehör (57) auf das Zentrierorgan (28) montiert ist.

## Claims

1. Electrical household food-preparation appliance comprising a working vessel (2), a rotary working accessory (57) arranged in the working vessel (2), a top motorised housing (4) arranged on the working vessel (2) in order to rotate the rotary working accessory (57) about an axis of rotation (58), a base (1) receiving the working vessel (2) and comprising an upright (10) having a motor electrical connector (11) to supply power to the top motorised housing (4), **characterised in that** the motor electrical connector (11) is arranged laterally in the upright (10), **in that** the top motorised housing (4) comprises at least two lateral pins (44a, 44b, 44c), preferably three lateral pins (44a, 44b, 44c), **in that** the lateral pins (44a, 44b, 44c) extend transversally with respect to the axis of rotation (58), and **in that** the top motorised housing (4) arranged on the working vessel (2) can be turned on the working vessel (2) to bring the motor electrical connector (11) into engagement with the lateral pins (44a, 44b, 44c) and supply power to the top motorised housing (4).

2. Electrical household food-preparation appliance according to claim 1, **characterised in that** the top motorised housing (4) arranged on the working vessel (2) can occupy successively by rotation with respect to the working vessel (2), an unlocked position wherein the top motorised housing (4) can be removed from the working vessel (2), a locked position wherein the top motorised housing (4) is retained on the working vessel (2), wherein the motor electrical connector (11) does not supply power to the top motorised housing (4), and a working position wherein the top motorised housing (4) is retained on the working vessel (2) and wherein the motor electrical connector (11) supplies power to the top motorised housing (4).

3. Electrical household food-preparation appliance according to one of claims 1 or 2, **characterised in that** the top motorised housing (4) is locked with the upright (10) by rotation about the axis of rotation (58).

4. Electrical household food-preparation appliance according to one of claims 1 to 3, **characterised in that** the top motorised housing (4) is locked with the working vessel (2) by rotation about the axis of rotation (58).

5. Electrical household food-preparation appliance according to one of claims 1 to 4, **characterised in that** the top motorised housing (4) is locked with a handle (80) of the working vessel (2) by rotation about the axis of rotation (58).

6. Electrical household food-preparation appliance according to one of claims 1 to 5, **characterised in that** the top motorised housing (4) is locked by rotation about the axis of rotation (58), and **in that** the top motorised housing (4) is locked opposite with respect to the axis of rotation (58) on the one hand with the upright (10) and on the other hand, with the working vessel (2).

7. Electrical household food-preparation appliance according to one of claims 1 to 6, **characterised in that** the working vessel (2) carries an intermediate cover (3), **in that** the top motorised housing (4) is arranged on the intermediate cover (3), and **in that** the top motorised housing (4) comprises a detection member (64) repelled by the intermediate cover (3) to enable the operation of the appliance when the motor electrical connector (11) supplies power to the top motorised housing (4).

8. Electrical household food-preparation appliance according to claim 7, **characterised in that** the detection member (64) is movably mounted against an electrical return element (71).

9. Electrical household food-preparation appliance according to claim 8, **characterised in that** the intermediate cover (3) comprises a lateral chamfer (77) repelling the detection member (64) against the elastic return element (71) to a repelled position when the top motorised housing (4) is turned on the intermediate cover (3) to supply power to the top motorised housing (4), and **in that** said detection member (64) in the repelled position actuates an electric switch enabling the operation of the appliance.

10. Electrical household food-preparation appliance according to one of claims 7 to 9, **characterised in that** the top motorised housing (4) is locked by bayonet with the intermediate cover (3).

11. Electrical household food-preparation appliance according to one of claims 1 to 10, **characterised in that** it comprises an electrical heating device (6) to heat up the food contained in the working vessel (2).

12. Electrical household food-preparation appliance according to claim 11, **characterised in that** the electrical heating device (6) is carried by the working vessel (2) and **in that** the base (1) comprises an electrical heating connector (15) to supply power to the electrical heating device (6) when the working vessel (2) is arranged on the base (1).

13. Electrical household food-preparation appliance according to claim 12, **characterised in that** the working vessel (2) comprises a container (20) made of stainless steel, and **in that** the electrical heating device (6) is fixed under a heat diffusion plate (60) arranged under the container (20).

14. Electrical household food-preparation appliance according to claim 13, **characterised in that** the electrical heating device (6) is formed by a shielded heating element (61).

15. Electrical household food-preparation appliance according to one of claims 1 to 14, **characterised in that** the working vessel (2) has a bottom (25) and comprises a centring member (28) rising from the bottom (25), and **in that** the rotary working accessory (57) is mounted on the centring member (28).
